Europäisches Patentamt

(19) European Patent Office

Office européen des brevets

(11) Publication number: **0 098 712**
**B1**

(12) EUROPEAN PATENT SPECIFICATION

(45) Date of publication of patent specification: **07.01.88**

(51) Int. Cl.⁴: **A 01 N 3/00**

(21) Application number: **83303581.9**

(22) Date of filing: **21.06.83**

(54) **Plant care products.**

(30) Priority: **02.07.82 GB 8219277**

(43) Date of publication of application:
**18.01.84 Bulletin 84/03**

(45) Publication of the grant of the patent:
**07.01.88 Bulletin 88/01**

(84) Designated Contracting States:
**BE DE FR IT NL SE**

(56) References cited:
**BE-A- 892 401**
**FR-A-2 206 352**
**FR-A-2 442 810**

**CHEMICAL ABSTRACTS, vol. 87, no. 6, 8th
August 1977, page 44, no. 40435y, Columbus,
Ohio, US.**

(73) Proprietor: **Caligen Foam Limited
Broad Oak
Accrington Lancashire (GB)**

(72) Inventor: **Bird, Donald
c/o CALIGEN FOAM LIMITED Broad Oak
Accrington Lancashire (GB)**
Inventor: **Bourke, Norman
c/o CALIGEN FOAM LIMITED Broad Oak
Accrington Lancashire (GB)**

(74) Representative: **MacMaster, Alan Jeffrey et al
Swindell & Pearson 44 Friar Gate
Derby DE1 1DA (GB)**

Courier Press, Leamington Spa, England.

## Description

The invention relates to plant care products and particularly to products for applying plant feed and conditioning the leaves of indoor plants.

Various chemical products have been proposed for use in supplying nutrients to indoor plants. Generally these are in liquid form and are diluted with water and applied direct to the growing medium or are sprayed on to the plant. Products are also available for cleaning and "polishing" the leaves of indoor plants since the accumulation of dust on the leaves of many indoor plants interferes with healthy growth and periodic cleaning of the leaves is therefore desirable.

The invention provides a product for the care of the leaves of indoor plants comprising a body member or carrier at least a portion of which is coated or impregnated with a combined plant nutrient and leaf cleaning and/or polishing composition.

The body member may comprise a pad of foamed plastics material and preferably incorporates at least two layers of material, one comprising polyurethane foam carrying or incorporating said plant feed and cleaning/polishing composition and the other comprising a less flexible polyethylene foam serving as a backing to rigidify and facilitate handling of the product. The back preferably also serves as a barrier preventing contact of the nutrient and polishing composition with the user's hand.

Where two layers of foamed plastics material are employed they are preferably adhered together by adhesive. If desired a plurality of layers of polyethylene foam may be provided and in addition or alternatively a printed polyethylene film may be applied to the exposed surface of the outer polyethylene layer for aesthetic purposes. Where more than one polyethylene foam layer is incorporated the polyethylene layers are preferably adhered together by flame bonding.

The product is preferably produced by cutting from a suitable sheet or block of synthetic plastics material which, in the case where more than one layer is incorporated has been previously laminated, the nutrient and polishing composition being incorporated in the sheet prior to cutting.

Preferably the nutrient and cleaning/polishing composition comprises a blend of silicone fluid and a liquid nutrient composition. Advantageously two silicone fluids of different viscosity are incorporated. The nutrient composition preferably incorporates nitrogen, phosphates and potash together with chelated trace elements.

An embodiment of the invention will now be described, by way of example only, with reference to the accompanying drawings, in which:

Fig. 1 is a perspective view of a plant feeding and cleaning product according to the invention;

Fig. 2 is a side elevation of the product; and

Fig. 3 is a plan view.

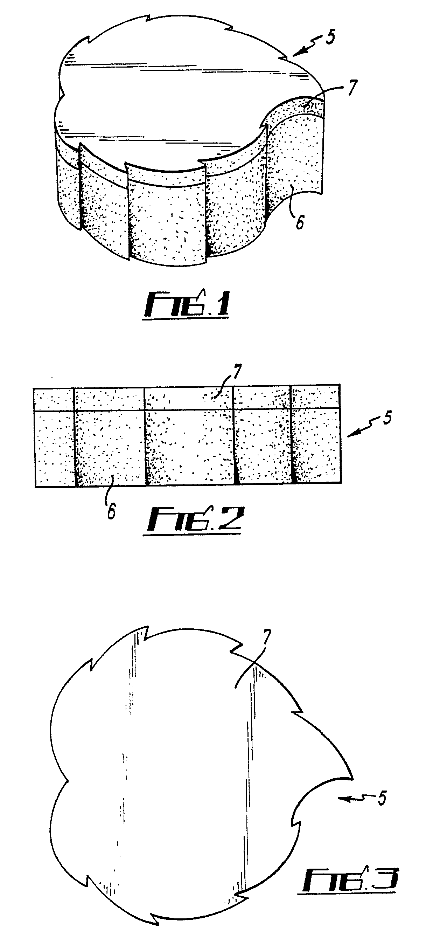

Referring to the drawings, the product comprises a body member or carrier 5 incorporating a layer 6 of flexible polyurethane foam impregnated or coated with a plant nutrient and cleaning/polishing product. The layer 6 is laminated to a thinner layer 7 of polyethylene foam of less flexible construction serving to rigidify the product and to act as a barrier preventing the nutrient and cleaning/polishing composition from making contact with the user's hand. The layers are adhered together by a synthetic rubber/resin adhesive and the overall shape of the product represents a leaf as can be seen from Fig. 2.

The polyurethane foam layer 6 preferably has a thickness of 10—40 mm, a density of 12—30 kg/m$^3$ and 25—65 cells/25.4 mm. The polyethylene layer 7 preferably has a thickness of 5—15 mm, a density of 24—35 kg/m$^3$ and 25—70 cells/25.4 mm. The adhesive used to secure the polyurethane and polyethylene foam layers together comprises a sprayable synthetic rubber/resin adhesive in a non-flammable solvent, preferably having a solids content of 25—30%, and open time of 15—300 seconds and being clear in colour.

The nutrient element of the plant nutrient and cleaning composition preferably comprises a liquid concentrate incorporating nitrogen, phosphate and potash components together with chelated trace elements, for example of magnesium, iron, manganese, copper and zinc. Trace elements of boron and molybdenum may also be present. A suitable product is sold under the Trade Mark LIBFEED 212 by Interlates Limited of Rickmansworth, England.

The cleaning or polishing medium comprises a blend of dimethyl polysiloxane fluids consisting of appropriate weights of three fluids having respective viscosities of 3, 100 and 300 cm$^2$/s (300, 10,000 and 30,000 centistokes). It comprises a clear water-white liquid of 100% silicone content.

The composition will generally incorporate 5 to 25% by weight of nutrient composition, 10 to 30% by weight of high viscosity silicone fluid, 20 to 40% by weight of intermediate viscosity silicone fluid and 30 to 70% by weight of low viscosity silicone fluid, although considerable variation in proportions is possible.

The product is fabricated from sheets of polyethylene and polyurethane foam of suitable size, for example 1,000 mm × 720 mm. The adhesive composition is sprayed on to one surface of each sheet such that both are evenly coated with approximately 60 grammes of adhesive on each. After approximately 20 seconds the two adhesive-coated surfaces are brought together and pressure is applied to ensure intimate contact and good adhesion between them, the edges of the sheets being aligned with each other. The laminated sheets are then allowed to stand until the solvent has evaporated. This generally takes place in around 30 minutes dependent upon ambient conditions. The sheets are ready for the impregnation process when the polyurethane and polyethylene foams can no longer be separated without tearing the polyurethane foam.

The nutrient and polishing preparation is prepared from the constituents referred to previously. The nutrient composition and the low viscosity silicone fluid are mixed in a suitable container until homogenous and the high viscosity silicone fluid is then blended into the mix.

The composition is then applied to a coating mangle to form a coat on one roller of the mangle when running. A doctor blade continuously removes excess material leaving a layer of composition at the nip. This is then applied to the exposed polyurethane foam surface of the laminated sheet material to produce a coating weight of 500—1200 grammes per square metre and preferably 700—850 grammes per square metre. The quantity applied may be varied as desired by adjustment of the doctor blades.

The speed of operation of the mangle may be varied to suit different requirements but will generally be operated at a speed of around 30—40 revs per minute. The gap between the mangle rollers should be set to 75% of the polyethylene foam thickness plus 10% of the polyurethane foam thickness. After impregnating and before packing the sheets are preferably stacked or stored so that the polyethylene foam surfaces do not come into contact with the impregnated polyurethane foam. This keeps the "handle" part of the product free from nutrient and polishing composition.

The sheets are then cut on a hydraulic press using foam cutting dies or forms. The surface of the cutting die or form is preferably covered with a non-porous material to prevent absorption of the silicone. After cutting, the products are removed from the sheet and suitably packed, for example by insertion into vacuum formed polystyrene trays. In use of the product it is removed from the tray and the polyurethane surface of the product is gently wiped over the upper surface of the plant leaves transferring the nutrient and polishing composition so as to feed and clean the plant leaves at the same time.

A specific example of the product according to the invention is as follows:

### Example

A polyurethane foam having a thickness of 25 mm, 14 cells per linear centimetre and a density of 13—16 kg/m³ was adhered by means of a synthetic rubber/resin adhesive in a non-flamable solvent to a polyethylene foam sheet having a thickness of 8 mm, a density of 30 kg/m³ ± 10% and 10 cells per linear centimetre. After allowing evaporation of the solvent the laminated sheet was passed through a coating mangle in which the exposed polyurethane surface was coated with a combined plant nutrient and polishing agent having the following composition by weight:

44.75% silicone fluid 3 cm²/s (300 centistokes) viscosity

14% plant nutrient composition (Libfeed® 212)

24.75% silicone fluid of 100 cm²/s (10,000 centistokes) viscosity

16.5% silicone fluid of 300 cm²/s (30,000 centistokes) viscosity

The composition was prepared by mixing the Libfeed® 212 with the 3 cm²/s (300 cS) silicone fluid and stiring until homogenous. The 100 cm²/s (10,000 Cs) and 300 cm²/s (30,000 Cs) silicone fluids were then blended into the mix and the material was applied to the polyurethane layer of the sheet material using a coating weight of 850 grammes per square metre. Thereafter the product was cut into suitable shapes using foam cutting forms, the individual products being packed in vacuum formed polystyrene trays and retained by detachable cardboard sheets or lids temporarily secured to edge portions of the trays by suitable adhesive.

In use of the product the closure sheet or cap is peeled away from the tray to provide access to the product. The product is inserted into the tray polyurethane layer first so that the polyethylene foam layer is exposed when the packing is opened and enables the product to be gripped and removed without contact of the impregnated polyurethane layer with the user's hand. If desired the product may be formed in the shape of a leaf or other shape appropriate to its purpose.

The above embodiment and the specific example are described by way of example only and many variations in materials and sizes may be effected without departing from the scope of the invention. For example the body member or pad may comprise a material other than foamed plastics material and the plant nutrient material may be of any desired composition which could be varied dependent on the intended end use, different compositions being used on products intended for use with specific plants rather than for general use.

Where foamed plastics materials are utilised these may differ as regards composition, pore size, density, thickness and other factors from those referred to above. In the case of a laminated product formed from foamed plastics material a plurality of layers of polyethylene foam may be provided which are preferably secured together by flame bonding and may be of the same or different thickness. A printed film of polyethylene may be bonded to the exposed face of the or the outer polyethylene foam layer and may carry decorative patterns, printed information or the like. The proportions and nature of the cleaning and polishing preparation may also be altered if desired and the quantity of nutrient and polishing composition applied may vary dependent on requirements. A fungicide and/or an insecticide may also be incorporated if desired.

### Claims

1. A product for the care of the leaves of indoor plants characterised by a body member or carrier (5) at least a portion of which is coated or impregnated with a combined plant nutrient and leaf cleaning and/or polishing composition.

2. A product according to claim 1 characterised in that said body member (5) comprises a pad of foamed plastics material.

3. A product according to claim 1 or 2 characterised in that said body member (5) incorporates at least two layers (6, 7) of material.

4. A product according to claim 3 characterised in that said body member (5) comprises a first layer (6) of flexible polyurethane foam carrying or incorporating said plant feed and cleaning/polishing composition and a backing layer (7) of less flexible material.

5. A product according to claim 4 characterised in that said backing layer (7) comprises polyethylene foam.

6. A product according to claim 4 or 5 characterised in that said backing layer (7) is substantially impervious to said plant feed and cleaning/polishing composition.

7. A product according to any of claims 4 to 6 characterised by a polyethylene film bonded to the outer surface of said backing layer (7).

8. A product according to any of claims 4 to 7 characterised in that said polyurethane foam layer (6) has a thickness of 10—40 mm.

9. A product according to any of claims 4 to 8 characterised in that said polyurethane foam has a density of 12—30 kg/m$^3$ and 25—65 cells/25.4 mm.

10. A product according to any of claims 4 to 9 characterised in that said backing layer (7) comprises polyethylene foam having a thickness of 5—15 mm.

11. A product according to any of claims 4 to 10 characterised in that said backing layer (7) comprises polyethylene foam having a density of 24—35 kg/m$^3$ and 25—70 cells/25.4 mm.

12. A product according to any of claims 4 to 11 characterised in that said polyurethane foam layer (6) and said backing layer (7) are adhered together by means of a synthetic rubber/resin adhesive in a non-flammable solvent and having a solids content of 25—30% and an open time of 15—300 seconds.

13. A product according to any preceding claim characterised in that said nutrient and cleaning/polishing composition comprises a blend of silicone fluid and a liquid nutrient composition.

14. A product according to claim 13 characterised in that at least two silicone fluids of different viscosity are incorporated.

15. A product according to any preceding claim characterised in that the nutrient element of said composition comprises a liquid concentrate incorporating nitrogen, phosphate and potash components together with chelated trace elements.

16. A product according to any preceding claim characterised in that it comprises 5—25% by weight of nutrient composition and 75—95% by weight of silicone fluid.

17. A product according to claim 16 characterised in that it comprises 5—25% by weight of nutrient composition, 10—30% by weight of high viscosity silicone fluid, 20—40% by weight of intermediate viscosity silicone fluid and 30—70% by weight of low viscosity silicone fluid.

18. A product according to claim 17 characterised in that said high, intermediate and low viscosities comprise 3, 100 and 300 cm$^2$/s (300,

10,000 and 30,000 centistokes) respectively.

19. A product according to any preceding claim characterised in that it incorporates a fungicide.

20. A product according to any preceding claim characterised in that it incorporates an insecticide.

21. A method of producing a product for the care of plants characterised by bonding together a backing sheet (7) and a carrier sheet (6) to form a laminated body member or carrier (5), applying a plant nutrient and leaf cleaning/polishing composition to said carrier sheet (6) and cutting the sheet into a plurality of individual products of predetermined size and shape.

22. A method according to claim 21 characterised in that said carrier sheet (5) comprises flexible polyurethane foam and said backing sheet (6) comprises less flexible polyethylene foam.

23. A method according to claim 22 characterised in that said polyurethane foam has a thickness of 10—40 mm and said polyethylene foam has a thickness of 5—15 mm.

24. A method according to any of claims 21 to 23 characterised in that said plant nutrient and cleaning/polishing composition comprises a blend of silicone fluid and a liquid nutrient composition.

25. A method according to any of claims 21 to 24 characterised in that said sheets are bonded together by adhesive.

**Patentansprüche**

1. Erzeugnis für die Pflege der Blätter von Zimmerpflanzen, gekennzeichnet durch einen Formkörper oder Träger (5), von dem mindestens ein Teil mit einer kombinierten Pflanzennähr- und Blattreinigungs- und/oder -polierzusammensetzung überzogen oder imprägniert ist.

2. Erzeugnis nach Anspruch 1, dadurch gekennzeichnet, daß der Formkörper (5) ein Kissen aus geschäumtem Kunststoffmaterial enthält.

3. Erzeugnis nach Anspruch 1 oder 2, dadurch gekennzeichnet, daß der Formkörper (5) mindestens zwei Materialschichten (6, 7) aufweist.

4. Erzeugnis nach Anspruch 3, dadurch gekennzeichnet, daß der Formkörper (5) eine erste Schicht (6) aus flexiblem Polyurethanschaum, die die Pflanzennähr- und Reinigungs/Polierzusammensetzung trägt oder aufnimmt, und eine Verstärkungsschicht (7) aus weniger flexiblem Material enthält.

5. Erzeugnis nach Anspruch 4, dadurch gekennzeichnet, daß die Verstärkungsschicht (7) Polyäthylenschaum enthält.

6. Erzeugnis nach Anspruch 4 oder 5, dadurch gekennzeichnet, daß die Verstärkungsschicht (7) im wesentlichen undurchlässig für die Pflanzennähr- und Reinigungs/Polierzusammensetzung ist.

7. Erzeugnis nach einem der Ansprüche 4 bis 6, gekennzeichnet durch einen mit der äußeren Oberfläche der Verstärkungsschicht (7) verbundenen Polyäthylenfilm.

8. Erzeugnis nach einem der Ansprüche 4 bis 7, dadurch gekennzeichnet, daß die Polyurethanschaumschicht (6) eine Dicke von 10—40 mm besitzt.

9. Erzeugnis nach einem der Ansprüche 4 bis 8, dadurch gekennzeichnet, daß der Polyurethanschaum eine Dichte von 12—30 kg/m³ und 25—65 Zellen/25,4 mm besitzt.

10. Erzeugnis nach einem der Ansprüche 4 bis 9, dadurch gekennzeichnet, daß die Verstärkungsschicht (7) Polyäthylenschaum mit einer Dicke von 5—15 mm aufweist.

11. Erzeugnis nach einem der Ansprüche 4 bis 10, dadurch gekennzeichnet, daß die Verstärkungsschicht (7) Polyäthylenschaum mit einer Dichte von 24—35 kg/m³ und 25—70 Zellen/25,4 mm aufweist.

12. Erzeugnis nach einem der Ansprüche 4 bis 11, dadurch gekennzeichnet, daß die Polyurethanschaumschicht (6) und die Verstärkungsschicht (7) mittels eines synthetischen Gummi/Harzklebers in einem nicht flammbaren Lösungsmittel und mit einem Feststoffgehalt von 25—30% und einer Abbindezeit von 15—300 Sekunden zusammengeklebt sind.

13. Erzeugnis nach jedem der vorstehenden Ansprüche, dadurch gekennzeichnet, daß die Nähr- und Reinigungs/Polierzusammensetzung eine Mischung aus Silikonöl und einer flüssigen Nährzusammensetzung enthält.

14. Erzeugnis nach Anspruch 13, dadurch gekennzeichnet, daß mindestens zwei Silikonöle verschiedener Viskosität enthalten sind.

15. Erzeugnis nach jedem der vorstehenden Ansprüche, dadurch gekennzeichnet, daß das Nährelement der Zusammensetzung ein flüssiges Konzentrat aufweist, das Stickstoff-, Phosphat- und Pottaschekomponenten zusammen mit Chelatspurenelementen enthält.

16. Erzeugnis nach jedem der vorstehenden Ansprüche, dadurch gekennzeichnet, daß es 5—25 Gewichtsprozent Nährzusammensetzung und 75—95 Gewichtsprozent Silikonöl enthält.

17. Erzeugnis nach Anspruch 16, dadurch gekennzeichnet, daß es 5—25 Gewichtsprozent Nährzusammensetzung, 10—30 Gewichtsprozent hochviskoses Silikonöl, 20—40 Gewichtsprozent Silikonöl mittlerer Viskosität und 30—70 Gewichtsprozent niederviskoses Silikonöl enthält.

18. Erzeugnis nach Anspruch 17, dadurch gekennzeichnet, daß die hohe, die mittlere und die niedrige Viskosität 3, 100 bzw. 300 cm²/S (300, 10 000 bzw. 30 000 Zentistokes) beträgt.

19. Erzeugnis nach jedem der vorstehenden Ansprüche, dadurch gekennzeichnet, daß es ein Fungizid enthält.

20. Erzeugnis nach jedem der vorstehenden Ansprüche, dadurch gekennzeichnet, daß es ein Insektizid enthält.

21. Verfahren zum Herstellen eines Erzeugnisses für die Pflege von Pflanzen, gekennzeichnet durch das miteinander Verbinden eines Verstärkungsbogens (7) und eines Trägerbogens (6), so daß ein geschichteter Formkörper oder -träger (5) gebildet wird, das Versehen des Trägerbogens (6) mit einer Pflanzennähr- und Blattreinigungs/Polierzusammensetzung und Schneiden des Bogens in eine Vielzahl einzelner Erzeugnisse vorbestimmter Größe und Form.

22. Verfahren nach Anspruch 21, dadurch gekennzeichnet, daß der Trägerbogen (5) flexiblen Polyurethanschaum und der Verstärkungsbogen (6) weniger flexiblen Polyäthylenschaum enthält.

23. Verfahren nach Anspruch 22, dadurch gekennzeichnet, daß der Polyurethanschaum eine Dicke von 10—40 mm und der Polyäthylenschaum eine Dicke von 5—15 mm besitzt.

24. Verfahren nach jedem der Ansprüche 21 bis 23, dadurch gekennzeichnet, daß die Pflanzennähr- und Reinigungs/Pflegezusammensetzung eine Mischung aus Silikonöl und einer flüssigen Nährzusammensetzung enthält.

25. Verfahren nach jedem der Ansprüche 21 bis 24, dadurch gekennzeichnet, daß die Lagen durch Kleben miteinander verbunden werden.

## Revendications

1. Produit pour l'entretien des feuilles de plantes d'intérieur, caractérisé par un élément corps ou support (5) dont au moins une partie est revêtue ou imprégnée d'une composition comprenant en combinaison un produit nutritif pour la plante et une composition de nettoyage et/ou de polissage des feuilles.

2. Produit selon la revendication 1, caractérisé en ce que l'élément corps (5) comporte un tampon de mousse en matière plastique.

3. Produit selon la revendication 1 ou la revendication 2, caractérisé en ce que l'élément corps (5) comporte au moins deux couches (6, 7) de matière.

4. Produit selon la revendication 3, caractérisé en ce que l'élément corps (5) comporte une première couche (6) de mousse de polyuréthane souple dans laquelle est disposée ou incorporée la nourriture de la plante et la composition de nettoyage/polissage et une couche de renforcement (7) de matière moins souple.

5. Produit selon la revendication 4, caractérisé en ce que la couche de renforcement (7) renferme de la mousse de polyéthylène.

6. Produit selon la revendication 4 ou la revendication 5, caractérisé en ce que la couche de renforcement (7) est essentiellement étanche au produit nutritif pour la plante et à la composition de nettoyage/polissage.

7. Produit selon l'une des revendications 4 à 6, caractérisé par un film de polyéthylène lié à la surface extérieure de la couche de renforcement (7).

8. Produit selon l'une des revendications 4 à 7, caractérisé en ce que la couche (6) de mousse de polyuréthane a une épaisseur de 10 à 40 mm.

9. Produit selon l'une des revendications 4 à 8, caractérisé en ce que la mousse de polyuréthane a une densité de 12—30 kg/m³ et de 25 à 65 cellules/25,4 mm.

10. Produit selon l'une des revendications 4 à 9, caractérisé en ce que la couche de renforcement (7) contient de la mousse de polyéthylène ayant une épaisseur de 5—15 mm.

11. Produit selon l'une des revendications 4 à 10, caractérisé en ce que la couche de renforcement (7) contient de la mousse de polyéthylène ayant une densité de 24—35 kg/m³ et de 25 à 70 cellules/25,4 mm.

12. Produit selon l'une des revendications 4 à 11, caractérisé en ce que la couche de mousse de polyuréthane (6) et la couche de renforcement (7) sont rendues solidaires au moyen d'une colle caoutchouc synthétique/résine dans un solvant non-inflammable, ayant une teneur en matières solides de 25—30% et une durée de vie en pot ouvert de 15—300 secondes.

13. Produit selon l'une des revendications précédentes, caractérisé en ce que le produit nutritif et la composition de nettoyage/polissage renferment un mélange de fluide de silicone et une composition nutritive liquide.

14. Produit selon la revendication 13, caractérisé en ce que l'on y incorpore au moins deux fluides de silicone de différentes viscosités.

15. Produit selon l'une des revendications précédentes, caractérisé en ce que le produit nutritif de la composition renferme un concentré liquide contenant de l'azote, du phosphate et de la potasse en même temps que des traces de complexants.

16. Produit selon l'une des revendications précédentes, caractérisé en ce qu'il contient de 5 à 25% en poids de composition nutritive et de 75 à 95% en poids d'un fluide de silicone.

17. Produit selon la revendication 16, caractérisé en ce qu'il contient de 5 à 25% en poids de composition nutritive, de 10 à 30% en poids de fluide de silicone de viscosité élevée, de 20 à 40% en poids de fluide de silicone de viscosité intermédiaire, et de 30 à 70% en poids de fluide de silicone de basse viscosité.

18. Produit selon la revendication 17, caractérisé en ce que les viscosités élevée, intermédiaire et basse sont respectivement de 300, 10,000 et 30,000 centistokes (3, 100 et 300 cm²/s).

19. Produit selon l'une des revendications précédentes, caractérisé en ce qu'il contient un fongicide.

20. Produit selon l'une des revendications précédentes, caractérisé en ce qu'il contient un insecticide.

21. Procédé d'obtention d'un produit pour l'entretien des plantes, caractérisé en ce que l'on rend solidaire une feuille de renforcement (7) et une feuille-support (6) pour former un corps laminé ou un support (5), en ce que l'on applique un produit nutritif pour la plante et une composition de nettoyage/polissage des feuilles à la feuille support (6) et que l'on coupe la feuille en une pluralité d'éléments individuels de dimensions et formes prédéterminées.

22. Procédé selon la revendication 21, caractérisé en ce que la feuille support (6) comporte de la mousse souple de polyuréthane et la feuille de renforcement (7) comporte de la mousse de polyéthylène moins souple.

23. Procédé selon la revendication 22, caractérisé en ce que la mousse de polyuréthane a une épaisseur de 10—40 mm, et en ce que la mousse de polyéthylène a une épaisseur de 5—15 mm.

24. Procédé selon l'une des revendications 21 à 23, caractérisé en ce que l'élément nutritif de la plante et la composition de nettoyage/polissage renferment un mélange de fluide de silicone et d'une composition nutritive liquide.

25. Procédé selon l'une des revendications 21 à 24, caractérisé en ce que les feuilles sont liées entre elles par collage.

FIG.1

FIG.2

FIG.3

1